# EUROPÄISCHE PATENTSCHRIFT

(11) **EP 1 238 771 B1**
(45) Veröffentlichungstag und Bekanntmachung des Hinweises auf die Patenterteilung: **15.12.2004**
(21) Anmeldenummer: 02090165.8
(22) Anmeldetag: 10.09.1998
(51) Int. Cl.: B29B 17/00, B26D 1/00, B29L 30/00, B09B 3/00

(54) **Vorrichtung zum Verarbeiten von Reifen**
Device for processing tires
Dispositif de transformation de pneus

(30) Priorität: 10.09.1997 DE 19740413
(43) Veröffentlichungstag der Anmeldung: 11.09.2002
(62) Teilanmeldung aus: 98945077.0
(73) Patentinhaber: Simon EnergieAnlagen GmbH & Co. ProLoop Patentverwertung KG, 16909 Dossow (DE)
(72) Erfinder: Schmeling, Burkhard, 15344 Strausberg (DE)
(74) Vertreter: Hengelhaupt, Jürgen D., Dipl.-Ing.

(56) Entgegenhaltungen:
- WO-A-97/26122
- DE-A- 4 200 949
- PATENT ABSTRACTS OF JAPAN vol. 095, no. 010, 30. November 1995 (1995-11-30) & JP 07 186142 A (TAMOTSU IGARASHI;OTHERS: 02), 25. Juli 1995 (1995-07-25)

## Beschreibung

Die Erfindung betrifft eine Vorrichtung zum Schneiden von Reifen.

Die Erfindung ist anwendbar insbesondere zur Umformung von nicht mehr verkehrstechnisch verwertbaren PKW-, LKW- oder Flugzeugreifen in einen neuen Grundbaustein, der als Ausgangsmaterial für die Herstellung von Produkten in vielfältigen Bereichen der Wirtschaft eingesetzt werden kann. Zwischenprodukt für die Herstellung neuer Endprodukte sind aus den Reifen geschnittene Ringe.

Die DE 39 33 729 A1 beschreibt ein Verfahren zur Verwertung von Altreifen, wobei die Reifen zerschnitten und zu Endlosbändern zusammengeführt werden. Die Anwendungsgebiete derartiger Endlosbänder sind relativ beschränkt.

Mit der DE 42 009 49 A1 wird ein Verfahren und gemäß dem Oberbegriff des Anspruchs 1, eine Vorrichtung zur Zerlegung von Altreifen beschrieben, mit welcher ein fixierter, rotierend angetriebener Reifen durch beweglich angeordnete Messer von außen zerschnitten wird, wodurch die Reifenlauffläche, zwei Steitenwände und zwei Wulstringe anfallen.

Der Erfindung liegt daher die Aufgabe zugrunde, eine Vorrichtung zu schaffen, mit welcher eine effektive und gefahrlose Aufarbeitung von verschiedensten Reifen in Form geschnittener Ringe ermöglicht wird.

Diese Aufgabe wird erfindungsgemäß gelöst durch die Merkmale im kennzeichnenden Teil des Anspruches 1 im Zusammenwirken mit den Merkmalen im Oberbegriff.

Zweckmäßige Ausgestaltungen der Erfindung sind in den Unteransprüchen enthalten.

Ein Vorteil der Erfindung besteht darin, dass die Umformung der Reifen in das Zwischenprodukt Ringe eine vollständig umweltfreundliche Produktionsmethode ist, bei der kein Abfall entsteht und keine Schadstoffe freigesetzt werden, indem die Reifen durch eine Aufeinanderfolge von Schnitten zerlegt werden derart, dass die zwei Seitenteile von der Lauffläche abgetrennt werden und die aus den Seitenteilen und/oder der Lauffläche entstehenden Ringe zu neuen Produkten miteinander verbunden werden. Auch der gummiummantelte Metallring, der den festen Sitz auf der Felge gewährleistet, kann weiterverwertet werden.

Alle Reifen, die nicht runderneuert werden können, nicht deformiert sind und nicht in Querrichtung geteilt worden sind, können verwendet werden. Das Verfahren ermöglicht für die Reifen eine Umformung am Anfallort.

Ein weiterer Vorteil der Erfindung besteht darin, dass die Elastizität der Ringe mit den Vorzügen des Reifens anteilsmäßig erhalten bleibt, wobei die Herstellung der Ringe derart erfolgt, dass der Reifen an einer Halterung befestigt ist und von einer Antriebsrolle gangetrieben wird, wobei die Antriebsrolle einen Wulst erzeugt und auf einer Welle mit mindestens einem Messer angeordnet ist, welches von innen an dem Wulst die Lauffläche des Reifens durchschneidet.

Durch die entstandene Ringform reduzieren sich Fläche und Volumen der Transportmasse auf Materialvolumen bzw. Materialwichte. Der Reifen ist in der neuen Form, also als Ring, sc zu transportieren, dass er das vorherige Volumen eines ganzen Reifens nicht mehr erreicht. Die entstandenen Ringe sind zwei- und dreidimensional in jede beliebige Form zu bringen, die der entstandene Ring zulässt.

Die Ringe sind in geeigneter Form stapelbar und transportabel. Werden die Reifen zu einer stationären Schneidanlage oder auch einer anderen Verwertungsanlage transportiert, so ist es zur Transportraumeinsparung vorteilhaft, dass die Reifen einmal entlang der Mitte der Lauffläche durchschnitten werden derart, dass zwei U-förmig ausgebildete Reifenteile entstehen, welche ineinander stapelbar sind.

Die Erfindung soll nachstehend anhand von zumindest teilweise in den Figuren dargestellten Ausführungsbeispielen näher erläutert werden. Es zeigen:
- Fig. 1: eine stilisierte Darstellung der Schnittführung an einem zur Hälfte dargestellten Reifen,
- Fig. 2: die Produkte aus der Schnittführung gemäß Fig. 1,
- Fig. 2A bis 2C: Varianten der Schneidvorrichtungen.

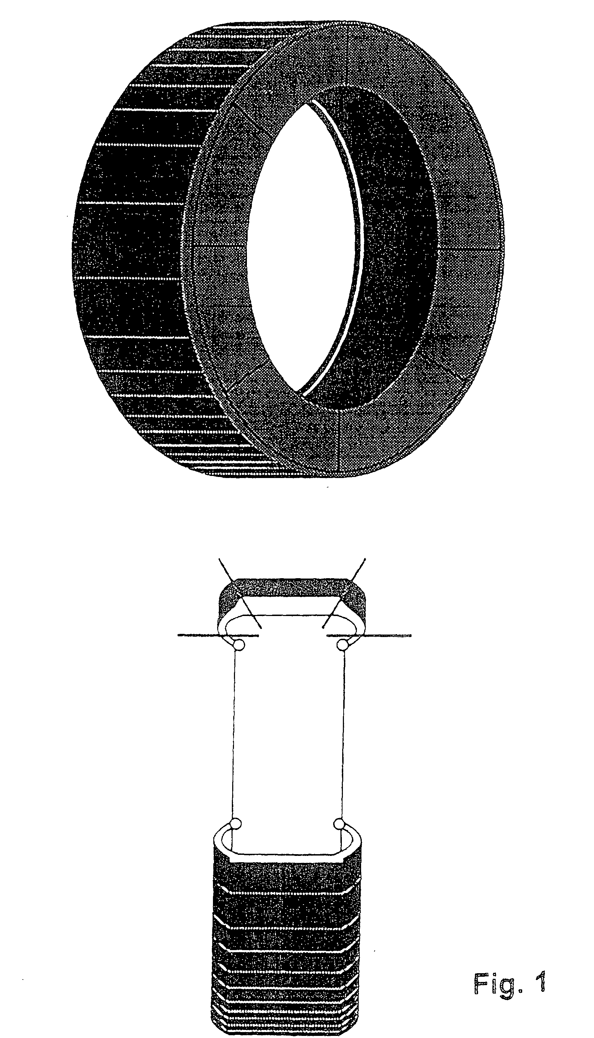

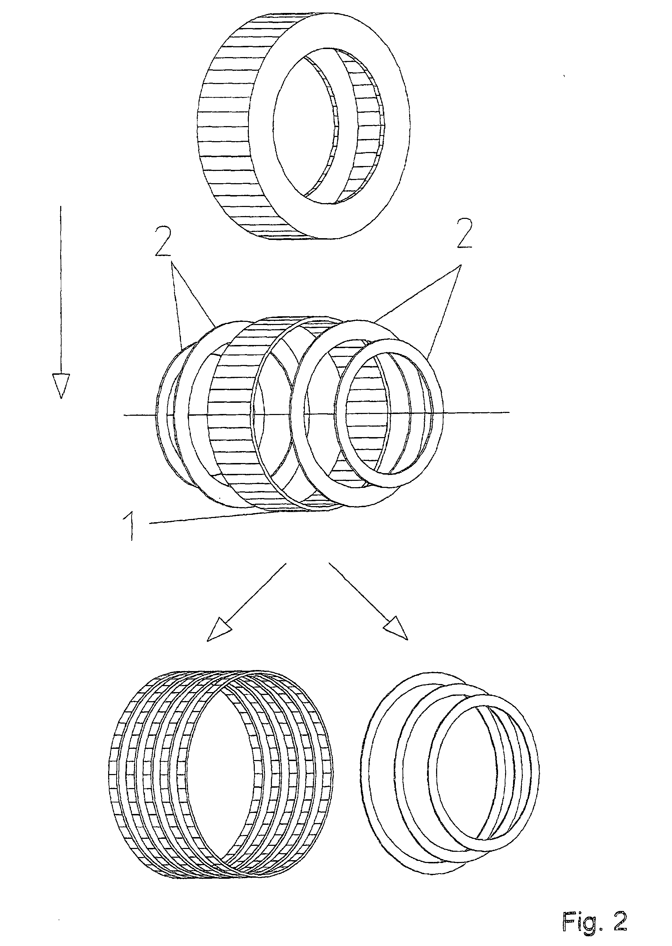

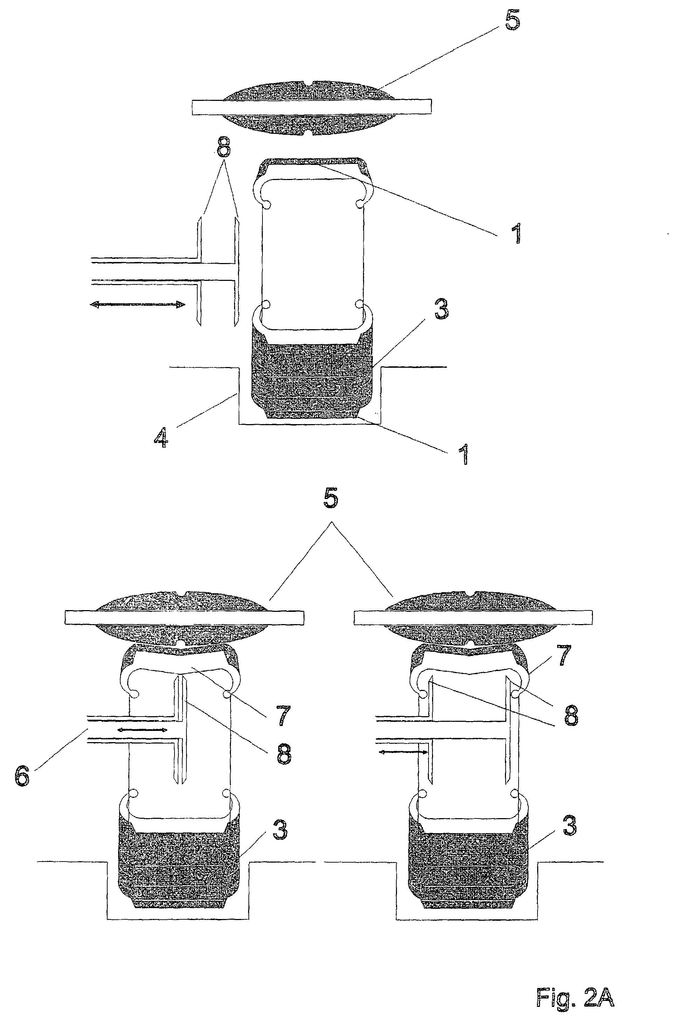

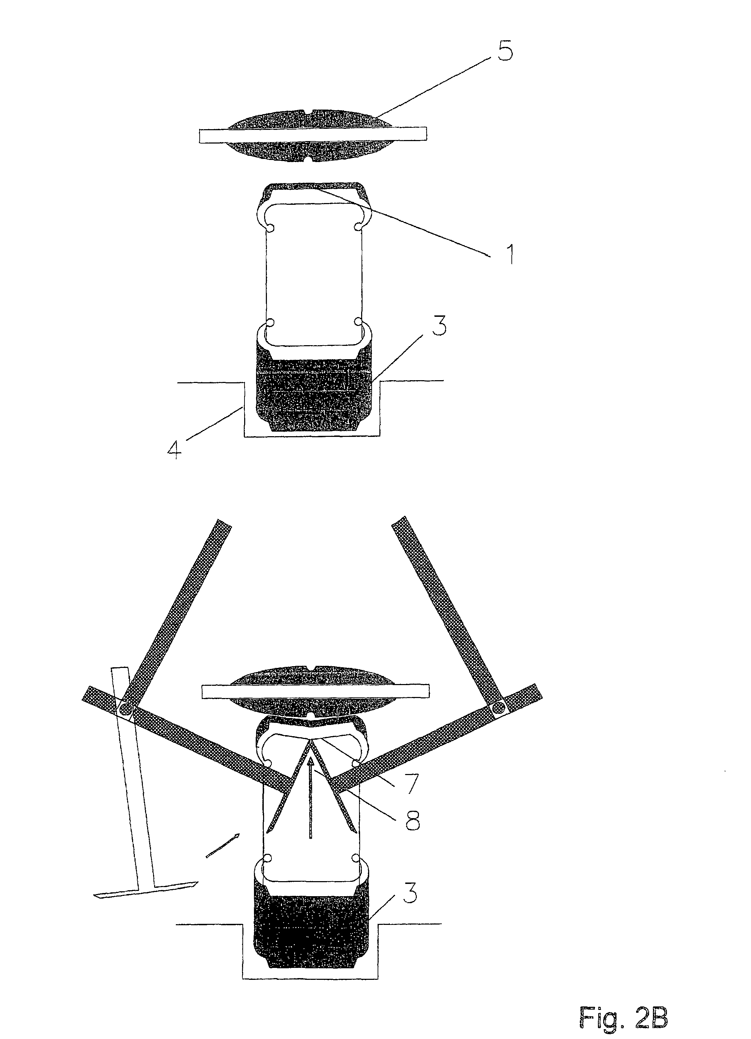

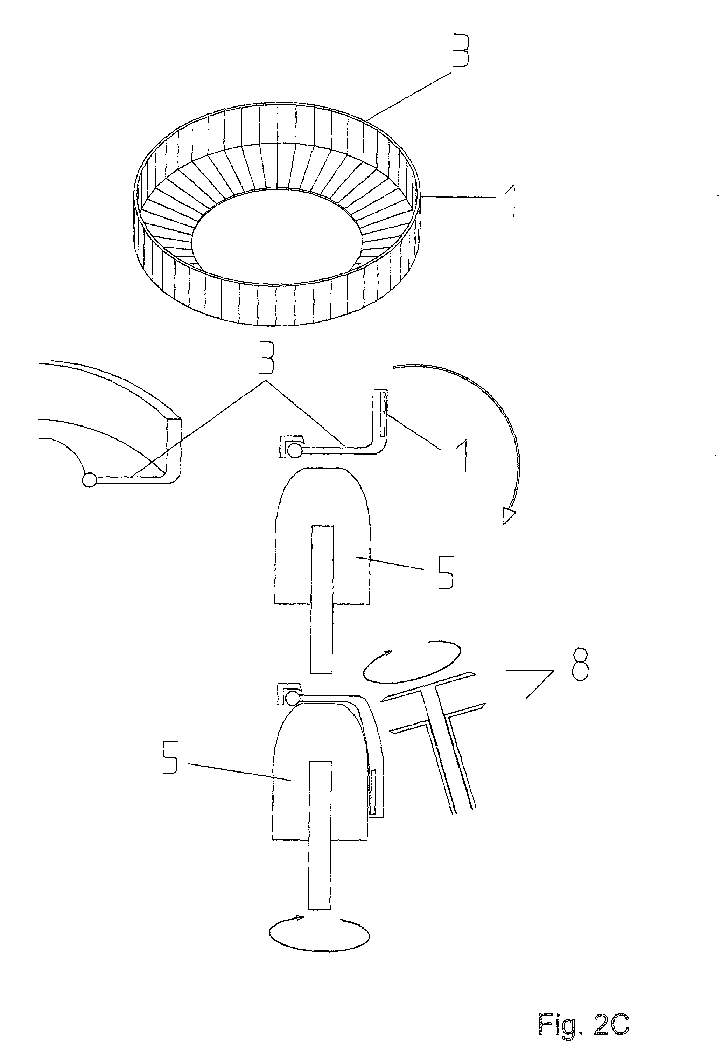

Wie in Fig. 1 dargestellt, wird ein Reifen derart geschnitten, dass ein Laufflächenring 1 und zwei Seitenringe 2 entstehen. Der Laufflächenring 1 und die Seitenringe 2 sind in Fig. 2 dargestellt.

Der Laufflachenring 1 kann durch weitere Schnitte in schmalere Ringe zerlegt werden, ebenso die Seitenringe 2.

Die Fig. 2A bis 2C zeigen Varianten der Schneidvorrichtungen.

Der Reifen 3 ist in einer Halterung oder Führung 4 oder freitragend, rollend an einer quer angeordneten Antriebsrolle 5 fixiert und wird seitengeführt. Die Messer 8 schwenken nach innen gegen den durch die Antriebsrolle 5 erzeugten Wulst 7 und zerschneiden den Reifen 3 in mindestens zwei ringförmige Teile. Die Schneidteile sind so angeordnet, dass sich der Gummi ihnen beim Schneiden in gespanntem Zustand entgegenstellt. Die Ablage der halben Reifen, wie sie in Fig. 2C dargestellt sind, geschieht nach beiden Seiten übereinander und wird durch geeignete Fixierungen zusammengehalten. Bei der Anwendung von Mehrfachmessersystemen sind mehrere Messer 8 in ihrem Abstand auf der Welle 6 variabel einstellbar. Dadurch können aus der Lauffläche 1 des Reifens 3 mehrere Ringe gleicher oder unterschiedlicher Breite hergestellt werden. Der Abtransport der Ringe aus dem Schneidsystem in die Ablage wird durch Griffelemente vorgenommen. Die Stabilisierung des Schneidvorganges wird durch das Ergreifen des Felgenwulstes in eine Aufnahmevorrichtung erreicht. Es sind alle mechanischen Positionierverfahren sowie Positionierverfahren mit Hilfe von Rechentechnik anwendbar. Ein Zerschneiden der Reifen ist auch durch von außen herausgeführte Messer 8 möglich.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren gemäß dem Gegenstand der Ansprüche, ohne den Rahmen der Erfindung zu verlassen.

### Bezugszeichenliste

- 1: Lauffläche
- 2: Seitenringe
- 3: Reifen
- 4: Führung
- 5: Antriebsrolle
- 6: Welle
- 7: Wulst
- 8: Messer

## Patentansprüche

1. Vorrichtung zum Schneiden von Reifen mit einer Messer auf einer Welle, wobei die Reifen zerschnitten werden und der Reifen (3) in einer Führung (4) fixiert ist und von einer Antriebsrolle (5) angetrieben wird,
**dadurch gekennzeichnet,**
**dass** die Antriebsrolle (5) einen Wulst (7) erzeugt und auf der Welle (6) mindestens ein Messer (8) angeordnet ist, welches von innen an dem Wulst (7) die Lauffläche (1) des Reifens (3) durchschneidet.

2. Vorrichtung nach Anspruch 1,
**dadurch gekennzeichnet,**
**dass** auf der Welle (6) mehrere Messer (8) entsprechend der Anzahl der gewünschten Ringe in ihrem Abstand zueinander variabel einstellbar sind.

3. Vorrichtung nach Anspruch 1,
**dadurch gekennzeichnet,**
**dass** eine Stabilisierung des Schneidevorganges durch Ergreifen des Felgenwulstes erfolgt.

## Claims

1. Device for the cutting of tires in the course of which the tires are cut up into slices and the tire (3) with a knife on a shaft is fixed inside a guiding facility (4) and rotated by a drive roller (5),
**characterized in that**
the drive roller (5) produces an internal swelling (7) and where at least one cutting blade (8) arranged on the shaft (6) cuts through the running tread (1) of the tire (3) from the inside at the swelling (7).

2. Device according to claim 9,
**characterized in that**
several cutters (8) are located at variably adjustable distances to each other on the shaft (6) depending on the number of rings desired.

3. Device according to claim 9,
**characterized in that**
stabilization of the cutting process is achieved by clamping the wheel-rim bending.

## Revendications

1. Dispositif pour la découpe de pneus, avec un couteau sur un arbre, où les pneus sont coupés et où le pneu (3) est fixé dans un guidage (4) et entraîné par une poulie d'entraînement (5),
**caractérisé en ce que**
la poulie d'entraînement (5) crée un renflement (7), et **en ce qu'**un couteau (8) au moins est disposé sur l'arbre (6), lequel coupe la bande de roulement (1) du pneu (3) à l'intérieur du renflement (7).

2. Dispositif selon la revendication 1,
**caractérisé en ce que**
la distance réciproque de plusieurs couteaux (8) est réglable de manière variable sur l'arbre (6) en fonction du nombre d'anneaux souhaités.

3. Dispositif selon la revendication 1,
**caractérisé en ce qu'**
une stabilisation du processus de découpe est obtenue par saisie du renflement de jante.
